# EUROPEAN PATENT APPLICATION

(11) **EP 4 393 729 A1**
(43) Date of publication of application: **03.07.2024**
(21) Application number: 23206722.3
(22) Date of filing: 30.10.2023
(51) Int. Cl.: B60C 19/00

(54) **TIRE ASSEMBLY**

(30) Priority: 26.12.2022 JP 2022208704
(71) Applicant: Sumitomo Rubber Industries, Ltd., Kobe-shi, Hyogo 651-0072 (JP)
(72) Inventor: YUKAWA, Naoki, Kobe-shi, 651-0072 (JP); SUGIMOTO, Mutsuki, Kobe-shi, 651-0072 (JP); KURODA, Kenichi, Kobe-shi, 651-0072 (JP); FUJIWARA, Takahiro, Kobe-shi, 651-0072 (JP); SUGIOKA, Kyota, Kobe-shi, 651-0072 (JP)
(74) Representative: Manitz Finsterwald Patent- und Rechtsanwaltspartnerschaft mbB

(57) **Abstract**

Provided is a tire assembly that suppresses vibration and noise derived from the masses of functional components. The tire assembly includes a tire, a sound absorbing material, and a plurality of functional components. The sound absorbing material is placed on an inner side of the tire. The plurality of functional components are placed on the inner side of the tire. The plurality of functional components are placed such that masses of the plurality of functional components as a whole are distributed along a circumferential direction of the tire.

## Description

### BACKGROUND OF THE INVENTION

### Field of the Invention

The present invention relates to a tire assembly in which functional components are incorporated.

### Background Art

Japanese Laid-Open Patent Publication No. 2017-108536 discloses a power generation device capable of improving efficiency of power generation by rotation of a tire, and a tire including the power generation device. The tire includes the power generation device on the inner side thereof. The power generation device includes a fixed unit fixed to the inner circumferential surface of the tire, and a movable unit provided so as to be able to vibrate relative to the fixed unit. The fixed unit includes a conductive coil. The movable unit includes a magnet suspended by a spring. When the magnet vibrates relative to the conductive coil due to rotation of the tire, a dielectric electromotive force is generated.

In a tire assembly in which a certain functional component is incorporated as in Japanese Laid-Open Patent Publication No. 2017-108536, the symmetry of the mass distribution along the circumferential direction of the tire is likely to be broken, causing unevenness of the mass distribution. Such unevenness of the mass distribution may cause unwanted vibration during rotation of the tire assembly due to first-order radial force variation, which may adversely influence the ride comfort of a vehicle. One method for dealing with this is, for example, to distribute and place a plurality of functional components along the circumferential direction of the tire. However, simply adopting this method has a problem that high-order radial force variation excites cavity resonance sound, thereby easily generating noise.

An object of the present invention is to provide a tire assembly in which functional components are incorporated and that suppresses vibration and noise derived from the masses of the functional components.

### SUMMARY OF THE INVENTION

A tire assembly according to a first aspect of the present invention includes a tire, a sound absorbing material, and a plurality of functional components. The sound absorbing material is placed on an inner side of the tire. The plurality of functional components are placed on the inner side of the tire. The plurality of functional components are placed such that masses of the plurality of functional components as a whole are distributed along a circumferential direction of the tire.

A tire assembly according to a second aspect of the present invention is the tire assembly according to the first aspect, wherein the plurality of functional components are each any of a power generation device, a sensor device, a secondary battery, a capacitor, an antenna device, a transmitter, a processor, a memory, and a circuit.

A tire assembly according to a third aspect of the present invention is the tire assembly according to the first or the second aspect, wherein at least one of the plurality of functional components is placed between an inner surface of the tire and the sound absorbing material.

A tire assembly according to a fourth aspect of the present invention is the tire assembly according to the first or the second aspect, wherein the plurality of functional components are placed such that the masses of the plurality of functional components as a whole are distributed at equal intervals along the circumferential direction of the tire.

A tire assembly according to a fifth aspect of the present invention is the tire assembly according to any one of the first to fourth aspects, wherein the plurality of functional components are placed so as to be distributed at at least four locations along the circumferential direction of the tire.

A tire assembly according to a sixth aspect of the present invention is the tire assembly according to any one of the first to fifth aspects, wherein a difference between a maximum value and a minimum value of the masses of the plurality of functional components placed so as to be distributed at equal intervals along the circumferential direction of the tire is not greater than 20 g.

A tire assembly according to a seventh aspect of the present invention is the tire assembly according to any one of the first to sixth aspects, wherein the sound absorbing material is composed of a sponge material.

A tire assembly according to an eighth aspect of the present invention is the tire assembly according to any one of the first to seventh aspects, wherein the sponge material has a specific gravity of not less than 0.005 and not greater than 0.05.

A tire assembly according to a ninth aspect of the present invention is the tire assembly according to any one of the first to eighth aspects, wherein a cross-sectional area of the sound absorbing material in a cut surface of the tire assembly extending outward in a radial direction of the tire from a central axis of the tire is not less than 3% and not greater than 20% of a cross-sectional area of an inner space defined by the inner surface of the tire in a state where the tire is fitted on a standardized rim and an air pressure of the tire is a standardized air pressure.

The "standardized rim" is a wheel rim defined for each tire classification according to the standard on which the tire is based. For example, if the tire is based on the JATMA standard, the "standard rim" in the JATMA standard is the above standardized rim, and if the tire is based on the ETRTO standard or the TRA standard, the "Measuring Rim" is the above standardized rim. The "standardized air pressure" is an air pressure defined for each tire classification according to the standard on which the tire is based. For example, if the tire is based on the JATMA standard, the "highest air pressure" is the standardized air pressure; if the tire is based on the ETRTO standard, the "INFLATION PRESSURE" is the standardized air pressure; and if the tire is based on the TRA standard, the maximum value recited in the table "TIRE LOAD LIMITS AT VARIOUS COLD INFLATION PRESSURES" is the standardized air pressure. In the case where the tire is for a passenger car, 180 kPa is set as the standardized air pressure. In addition, in the case where the tire is based on the Extra Load standard or the Reinforced standard, 220 kPa is set as the standardized air pressure.

A tire assembly according to a tenth aspect of the present invention is the tire assembly according to any one of the first to ninth aspects, wherein the sponge material has a thickness of not less than 5 mm and not greater than 30 mm.

A tire assembly according to an eleventh aspect of the present invention is the tire assembly according to any one of the first to tenth aspects, wherein the sponge material is selected from the group consisting of a chloroprene rubber sponge, an ethylene-propylene rubber sponge, a nitrile rubber sponge, an ether-based polyurethane sponge, an ester-based polyurethane sponge, and a polyethylene sponge.

A tire assembly according to a twelfth aspect of the present invention is the tire assembly according to any one of the first to eleventh aspects, wherein each of the masses of the plurality of functional components is not greater than 20 g.

According to the present invention, a tire assembly in which functional components are incorporated and that suppresses vibration and noise derived from the masses of the functional components, is provided.

### BRIEF DESCRIPTION OF THE DRAWINGS

FIG. 1 is a perspective view showing the entire configuration of a tire assembly according to one embodiment;
FIG. 2 is a longitudinal cross-sectional view of the tire assembly;
FIG. 3 is a perspective view showing the entire configuration of a sound absorbing material according to the one embodiment;
FIG. 4 illustrates a cut surface of the tire assembly; and
FIG. 5 is a longitudinal cross-sectional view of a tire assembly according to a modification.

### DETAILED DESCRIPTION

Hereinafter, a tire assembly according to one embodiment of the present invention will be described with reference to the drawings.

### <1. Entire Configuration>

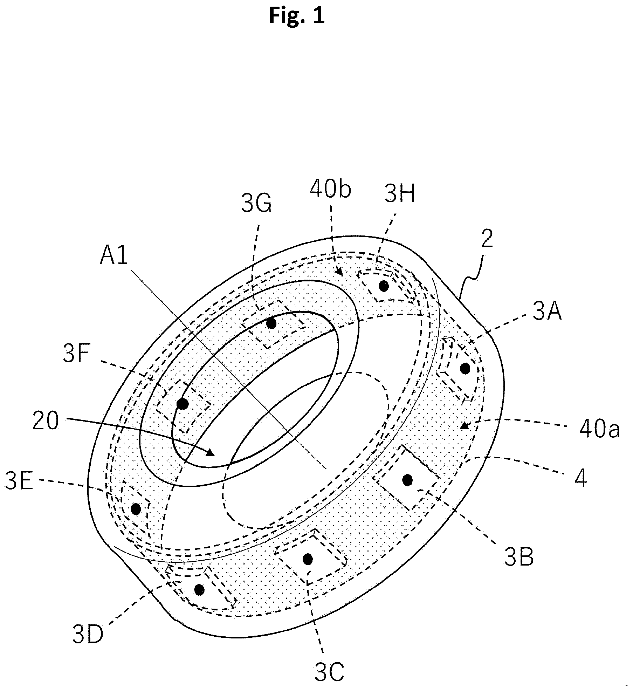

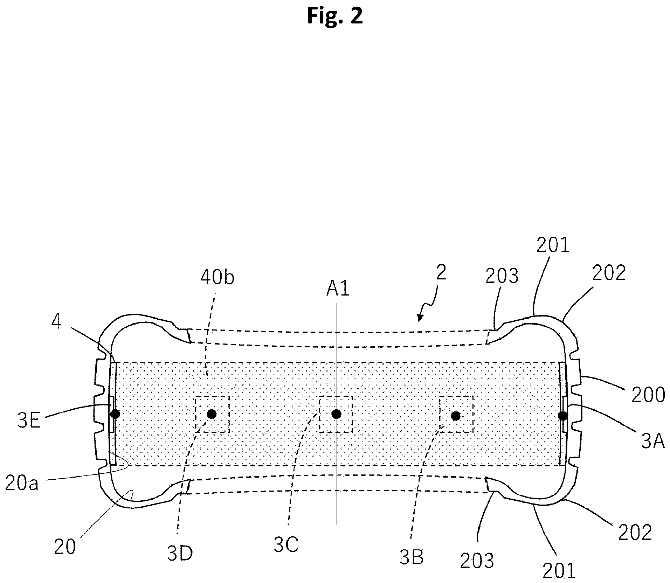

FIG. 1 is a perspective view showing the entire configuration of a tire assembly 1 according to one embodiment of the present invention, and FIG. 2 is a longitudinal cross-sectional view of the tire assembly 1 (a view of a cross-section of the tire assembly 1 along the radial direction thereof). The tire assembly 1 is a tire product having additional functions such as a sensing function, a power generation function, or a signal transmission function, and is configured to be mounted to each of the wheels of various vehicles and rotate on a road surface. As shown in FIG. 1, the tire assembly 1 includes a tire 2, a sound absorbing material 4, and a plurality of functional components 3A to 3H. The sound absorbing material 4 is fixed to an inner surface 20 of the tire 2. The plurality of functional components 3A to 3H are each placed between the inner surface 20 and an outer circumferential surface 40a of the sound absorbing material 4, or on an inner circumferential surface 40b side of the sound absorbing material 4. Each component will be described below.

### <2. Configuration of Each Component>

### [Tire]

The tire 2 is composed of a vulcanized rubber or the like and has elasticity. The type and the structure of the tire 2 are not particularly limited, but the tire 2 of the present embodiment includes a tread portion 200, sidewall portions 201, shoulder portions 202, and bead portions 203 as shown in FIG. 2. The tread portion 200 is a portion that defines a lateral circumferential surface of the tire assembly 1, and comes into contact with a road surface and generates friction to advance a vehicle. The sidewall portions 201 bend and flex to absorb impacts from a road surface. The shoulder portions 202 are portions that are continuous to the tread portions 200 and the sidewall portions 201. The bead portions 203 are portions that are fixed to a wheel rim, and include therein bead wires which are not shown. The tire 2 further has the inner surface 20 which defines the inner space of the tire 2. Hereinafter, an annular surface, of the inner surface 20, corresponding to the back side of the tread portion 200 is sometimes referred to as inner surface 20a to distinguish the annular surface from the other portions.

### [Sound Absorbing Material]

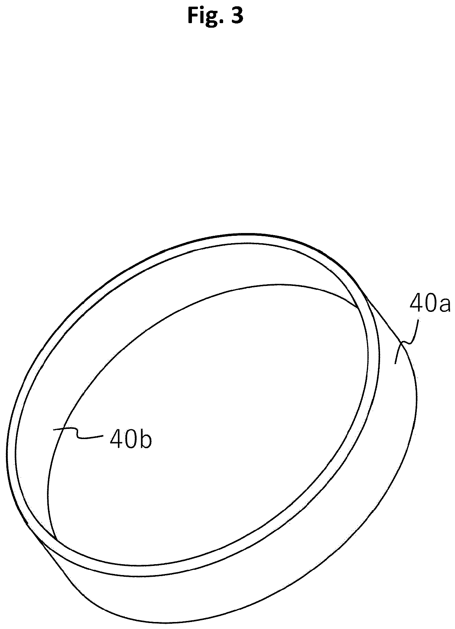

FIG. 3 is a perspective view showing the entire configuration of the sound absorbing material 4 according to the present embodiment. The sound absorbing material 4 is a component for absorbing and reducing the cavity resonance sound generated in the inner space of the tire 2 as the tire assembly 1 rotates. In the present embodiment, the sound absorbing material 4 is formed in an annular shape, and is fixed to the inner surface 20 over the entire circumference of the inner surface 20a. That is, the circumferential length of the outer circumferential surface 40a of the sound absorbing material 4 is substantially equal to the circumferential length of the inner surface 20a. The shape of the sound absorbing material 4 is not particularly limited, and the sound absorbing material 4 may have a cross-sectional shape in which the thickness thereof varies along the circumferential direction or the width direction, for example. In addition, for example, the sound absorbing material 4 may be formed such that portions thereof corresponding to the functional components 3A to 3H are thinner than the other portion thereof in order to absorb the thicknesses of the functional components 3A to 3H described later.

In the present embodiment, the sound absorbing material 4 is composed of a sponge material. The sponge material is not particularly limited as long as the sponge material is a porous structure having cushioning properties, and may be, for example, a rubber or synthetic resin foam, a three-dimensional structure formed by accumulating fibrous members, or the like. A chloroprene rubber (CR) sponge, an ethylene-propylene rubber (EPR, EPDMR) sponge, and a nitrile rubber (NBR) sponge are preferable as the rubber foam, and an ether-based polyurethane sponge, an ester-based polyurethane sponge, and a polyethylene sponge are preferable as the synthetic resin foam. These sponge materials may each have a closed cell structure, a continuous cell structure, or a mixed structure of closed cells and continuous cells.

The specific gravity of the sound absorbing material 4 is preferably not less than 0.005 and not greater than 0.05. The thickness of the sound absorbing material 4 in an uncompressed state where no external force is applied and the sound absorbing material 4 is not compressed is preferably not less than 5 mm and not greater than 30 mm. In the case where the thickness of the sound absorbing material 4 is not constant, the thickness of the entire sound absorbing material 4 is preferably not less than 5 mm and not greater than 30 mm.

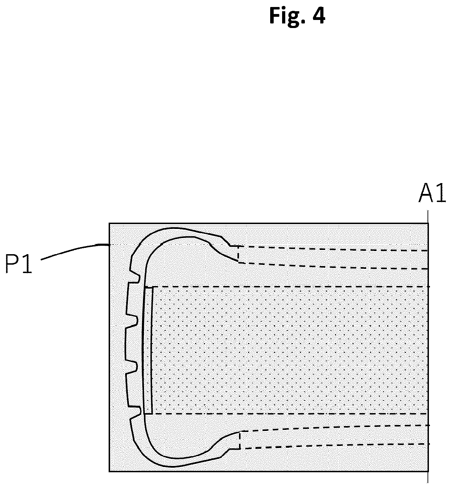

Furthermore, the cross-sectional area of the sound absorbing material 4 in a cut surface P1 (see FIG. 4) of the tire assembly 1 extending outward in the radial direction of the tire 2 from a central axis A1 of the tire 2 is preferably not less than 3% and not greater than 20% of the cross-sectional area of the inner space defined by the inner surface 20 when the tire 2 is fitted on a standardized rim (a wheel having the standardized rim) and the air pressure of the tire 2 is a standardized air pressure.

The method for fixing the sound absorbing material 4 to the tire 2 is not particularly limited. The sound absorbing material 4 may be fixed to the inner surface 20 via an adhesive or a pressure sensitive adhesive. Alternatively, one or more protrusions may be formed in the tire 2 so as to project from the inner surface 20 into the inner space, one or more through holes corresponding to the one or more protrusions may be formed in the sound absorbing material 4, and the sound absorbing material 4 may be fixed to the tire 2 by causing the one or more protrusions to penetrate through the corresponding one or more through holes. Still alternatively, fixing members capable of being coupled with each other may be provided to the outer circumferential surfaces of the inner surface 20 and the sound absorbing material 4, respectively, and the sound absorbing material 4 may be fixed to the tire 2 by coupling these fixing members with each other. Examples of the fixing members include a pair of hook and loop fasteners, a pair of magnets, a pair of a magnet and a magnetic material, and a pair of snap buttons. The sound absorbing material 4 may be fixed to the tire 2 so as to be non-separable from the inner surface 20, or may be fixed to the tire 2 so as to be separable from the inner surface 20.

### [Functional Components]

The plurality of functional components are placed so as to be spaced apart from each other such that the functional components are distributed along the circumferential direction of the tire 2. The tire assembly 1 of the present embodiment includes the eight functional components 3A to 3H, but the number of functional components is not particularly limited. As described above, the functional components 3A to 3H are each placed between the inner surface 20a and the outer circumferential surface 40a or on the inner circumferential surface 40b side of the sound absorbing material 4. At least one of the plurality of functional components is preferably placed between the inner surface 20a and the outer circumferential surface 40a. In the present embodiment, the functional components 3A to 3G are placed between the inner surface 20a and the outer circumferential surface 40a, and the functional component 3H is placed on the inner circumferential surface 40b. Each of the functional components 3A to 3G may be fixed on the inner surface 20, may be fixed on the outer circumferential surface 40a of the sound absorbing material 4, or may be fixed on both the inner surface 20 and the outer circumferential surface 40a. Each of the functional components 3A to 3H may be any of a power generation device, a sensor device, a secondary battery, a capacitor, an antenna device, a transmitter, a processor, a memory, and a circuit. That is, the plurality of functional components included in the tire assembly 1 may include two or more functional components of the same type, and may not necessarily include all of the types of functional components described above.

The power generation device is not particularly limited as long as the power generation device generates power using deformation of the tire 2, and may be a device using a piezoelectric element, a device that generates power using contact electrification, or the like. The device that generates power using contact electrification is, for example, a device that has a first surface formed from an insulating material and a second surface formed from an insulating material different from that of the first surface and generates a potential difference due to a change in the true area of contact between the first surface and the second surface, or the like. The power generation device generates power in conjunction with rotation of the tire 2. Therefore, the power generation device can also be used as a sensor for monitoring at least one of a tire rotation speed, a tire wear state, a road surface condition, and a ground-contact state, by detecting a change in the potential difference generated in the power generation device. In the case where the tire assembly 1 includes a secondary battery or a capacitor as another functional component, the electricity generated in the power generation device may be stored in the secondary battery or the capacitor. In the case where the tire assembly 1 includes an electronic device such as a sensor device, an antenna, a transmitter, a processor, or a memory as another functional component, the electricity generated in the power generation device may be supplied to these electronic devices as appropriate.

The sensor device is not particularly limited as long as the sensor device acquires sensing data inside the tire assembly 1, and may be, for example, an air pressure sensor, a temperature sensor, a speed sensor, an acceleration sensor, a rotation speed sensor, a rotation angle sensor, or the like. In the case where the tire assembly 1 includes a processor as another functional component, the sensing data acquired by the sensor device may be processed by the processor into processed data. In the case where the tire assembly 1 also includes a memory as another functional component, the sensing data acquired by the sensor device or the processed data thereof may be stored in the memory. In the case where the tire assembly 1 further includes an antenna as another functional component, the sensing data acquired by the sensor device or the processed data thereof may be transmitted via the antenna to a device external to the tire assembly 1 such as an in-vehicle device.

The processor is not particularly limited as long as the processor executes programs, calculates, converts, processes, and transmits/receives data, and controls the operation of other functional components, for example, and is composed of, for example, an IC chip including an arithmetic unit, a register, and a peripheral circuit, etc., as hardware. In addition to generating processed data and transmitting data as described above, the processor may distribute the electricity generated in the power generator and receive data from external devices via an antenna, for example.

The memory is not particularly limited as long as the memory has a data storage area, and is composed of, for example, a flash memory chip as hardware. The memory may be a non-volatile rewritable memory, or may be a non-rewritable memory in which programs, etc., are stored, or a volatile memory for temporarily storing data.

The secondary battery is not particularly limited as long as the secondary battery is a battery that can be used repeatedly by recharging, and may be, for example, a lithium ion battery, a lithium battery, an alkaline battery, a silver oxide/zinc oxide battery, an all-solid-state battery, or the like. The secondary battery can be used to supply electricity to the above electronic devices.

The capacitor is not particularly limited, and any type of capacitor can be used. The capacitor may be used to keep a voltage constant or reduce noise as necessary in addition to storing the electricity generated in the power generation device and supplying the electricity to the above electronic devices.

The antenna device is not particularly limited as long as the antenna device transmits and receives radio waves, and any type of antenna device can be used. The antenna device may include, in addition to an antenna itself for converting radio waves and electric current into each other, a communication device for establishing wireless communication between the tire assembly 1 and a device external to the tire assembly 1.

The transmitter is not particularly limited as long as the transmitter transmits radio waves. The transmitter may be, for example, a BLUETOOTH (registered trademark) transmitter, a location information transmitter that transmits location information acquired from a satellite positioning system such as GPS to an external device, or the like.

The circuit may be a circuit for operating other functional components, or a circuit for operating other functional components in coordination with each other, and the configuration thereof is not particularly limited.

At least some of the functional components 3A to 3H placed so as to be distributed along the circumferential direction of the tire 2 may be electrically connected to each other using a lead wire or the like (not shown). However, from the viewpoint of suppressing vibration and noise of the tire assembly 1, the mass of the lead wire or the like to be used is preferably sufficiently small with respect to each of the masses of the functional components 3A to 3H. A preferable range of each of the masses of the functional components 3A to 3H will be described later.

### <3. Placement of Functional Components>

If the mass balance along the circumferential direction of a tire is significantly disrupted by providing functional components on the inner side of the tire, unwanted vibration may be caused due to rotation of the tire, thereby impairing comfortable running of a vehicle. First-order radial force variation (RFV) mainly contributes to this vibration. In the tire assembly 1, in order to suppress vibration caused by the radial force variation, the functional components are preferably placed such that the masses of the functional components as a whole are distributed as evenly as possible and at as equal intervals as possible along the circumferential direction of the tire 2. Therefore, in the present embodiment, the functional components 3A to 3H are placed such that the centers of gravity thereof are spaced apart in the circumferential direction of the tire 2 at 45 degree intervals based on the central axis A1 of the tire 2 (for convenience of description, the positions of the centers of gravity of the functional components 3A to 3H are indicated by black dots in the drawing). However, there may be an error of ±10 degrees or less in the intervals based on the central axis A1. That is, the fact that the masses of the plurality of functional components are "distributed at equal intervals" along the circumferential direction of the tire includes, in addition to the case where the centers of gravity of the respective functional components are located so as to be spaced apart at equal angles, the case where the centers of gravity of the respective functional components are located at intervals including an error of ±10 degrees or less.

In addition, in order to distribute the masses of the functional components as a whole as evenly as possible, the difference in mass of each functional component to be distributed and placed is preferably made as small as possible. More specifically, the difference between the maximum value and the minimum value of the masses of the respective functional components is preferably not greater than 20 g. When the difference in mass of each functional component is set to not greater than the above upper limit, the mass imbalance caused by the functional components can be cancelled to a preferable degree by adjustment after the tire assembly 1 is mounted on the wheel. On the other hand, if the difference in mass of each functional component exceeds the above upper limit, even when the mass balance is adjusted with a counterweight after the tire assembly 1 is mounted on the wheel, the radial force variation is increased by the difference in mass of each functional component to be distributed and placed, and the influence of vibration is increased, thus leading to deterioration of ride comfort.

In addition, in order to suppress the vibration of the tire assembly 1 caused by a high-order component of the radial force variation, each of the masses of the functional component itself is preferably small. Specifically, each of the masses of the functional components is preferably not greater than 20 g. If each of the masses of the functional components exceeds 20 g, even when the mass balance is adjusted with a counterweight after the tire assembly 1 is mounted on the wheel, the radial force variation is increased by the masses of the functional components, and the influence of vibration is increased, thus leading to deterioration of ride comfort.

The number for distributing the masses of the plurality of functional components along the circumferential direction of the tire 2 (the number of locations where the plurality of functional components are placed along the circumferential direction of the tire 2) is not particularly limited, but is preferably not less than 4, more preferably not less than 8, and further preferably not less than 10, and is preferably not greater than 12. That is, the plurality of functional components are preferably distributed at at least four locations along the circumferential direction of the tire 2.

As described above, the mass imbalance caused by the functional components can be adjusted with a counterweight or the like after the tire assembly 1 is mounted on the wheel. However, during rotation of the tire assembly 1, mass imbalance (vibration) is caused when each of the locations where the functional components are placed comes into contact with a road surface, and this mass imbalance is transmitted as an excitation force from the tire assembly 1 to the vehicle. The excitation force increases in proportion to the square of the rotation speed of the tire assembly 1. As the number of locations where the functional components are placed along the circumferential direction of the tire 2 increases, the number of times the mass imbalance is caused during one rotation of the tire assembly 1 increases, so that an excitation frequency at which the excitation force is applied to the vehicle is increased, while the rotation speed of the tire assembly 1 at which the excitation frequency coincides with the resonance frequency of the vehicle is decreased. That is, when the number of locations where the functional components are placed is denoted by n, the rotation speed of the tire assembly 1 at which the excitation frequency coincides with the resonance frequency of the vehicle is 1/n times. When the excitation frequency and the resonance frequency coincide with each other, the vibration of the vehicle is increased, but usually, even when the excitation frequency and the resonance frequency merely become closer to each other, the vibration of the vehicle is increased as well.

Due to the above, if the locations where the functional components are placed increases, when the rotation speed of the tire assembly 1 is low (that is, the excitation force is small), since the excitation frequency and the resonance frequency coincide with each other, the vibration transmitted to the vehicle becomes small. Thus, the effect of suppressing the radial force variation becomes more significant when the number of locations where the functional components are placed is not less than 4. However, as the number of locations where the functional components are placed increases, a wiring structure connecting the functional components to each other becomes more complicated, thereby increasing the time and effort for processing. According to a study by the present inventors, if the number of locations where the functional components are placed exceeds 10, the effect of suppressing the radial force variation tends to reach its peak. That is, when the number of locations where the functional components are placed exceeds 10, the running speed at which the vehicle resonates becomes sufficiently low, so that the vibration of the vehicle at the speed at which the vehicle normally runs remains almost unchanged even if the number of locations where the functional components are placed is increased further. Therefore, the number for distributing the masses of the plurality of functional components is preferably determined in consideration of the balance between the time and effort for processing for connecting the functional components to each other, a degree of complication of the structure for connecting the functional components to each other, and the effect of suppressing the RFV.

Even if the masses of the plurality of functional components as a whole are evenly distributed at as equal intervals as possible along the circumferential direction of the tire 2, since the plurality of functional components are placed, the cavity resonance sound caused by the high-order component of the radial force variation can increase. The cavity resonance sound is noise generated when the vehicle having the tire assembly 1 mounted thereon runs on a road surface and the air inside the tire assembly 1 vibrates and resonates due to the impact received by the tire assembly 1 from the road surface. The cavity resonance sound is generated mainly when the vehicle runs at a speed of about 30 km to 80 km per hour, although this depends on the size of the tire 2 and the number of functional components. In addition, according to a study by the present inventors, the cavity resonance sound is increased when the number of locations where the functional components are placed is not less than 7. However, since the tire assembly 1 includes the sound absorbing material 4, the cavity resonance sound caused by the plurality of functional components can be reduced.

Which of the plurality of functional components is placed on the outer circumferential surface 40a side of the sound absorbing material 4, and which of the plurality of functional components is placed on the inner circumferential surface 40b side of the sound absorbing material 4, can be selected as appropriate according to the convenience of wiring, the masses and the characteristics of the functional components, the thickness and the hardness of the sound absorbing material 4, etc. For example, if the sponge material of the sound absorbing material 4 is relatively hard, or if the sponge material itself is relatively soft but the thickness thereof is relatively large, the functional components can be placed on the inner circumferential surface 40b side from the viewpoint of reliably mounting the sound absorbing material 4 on the inner surface 20. This is because, if the sponge material of the sound absorbing material 4 is relatively hard or relatively thick, it can be relatively difficult to reliably attach the sound absorbing material 4 to the inner surface 20 of the tire 2 via an adhesive or a pressure sensitive adhesive. The thickness of the sponge material may be said to be relatively large if the thickness of the sponge material is not less than 20 mm, and may be said to be relatively small if the thickness of the sponge material is less than 20 mm. The hardness of the sponge material may be said to be relatively hard if the ASKER C hardness thereof is not less than 30°, and may be said to be relatively soft if the ASKER C hardness thereof is less than 30°. Furthermore, a continuous-cell-type sponge material having flexibility may be said to be relatively soft. Moreover, the capacitor which is likely to be influenced by vibration can be placed on the inner circumferential surface 40b side from the viewpoint of suppressing the influence of vibration. On the other hand, if a functional component is placed on the inner circumferential surface 40b side, the mass of the functional component may add a load to the sound absorbing material 4 due to vibration during running, so that it may be preferable to place the functional component on the outer circumferential surface 40a side. In the case where a functional component is placed between the outer circumferential surface 40a and the inner surface 20a of the tire 2, the functional component can be more reliably fixed to the tire 2 having high stiffness. Thus, generation of vibration or cavity resonance sound can be suppressed. In addition, the sensor can acquire more accurate information when being fixed to the inner surface 20a of the tire 2.

### <4. Modifications>

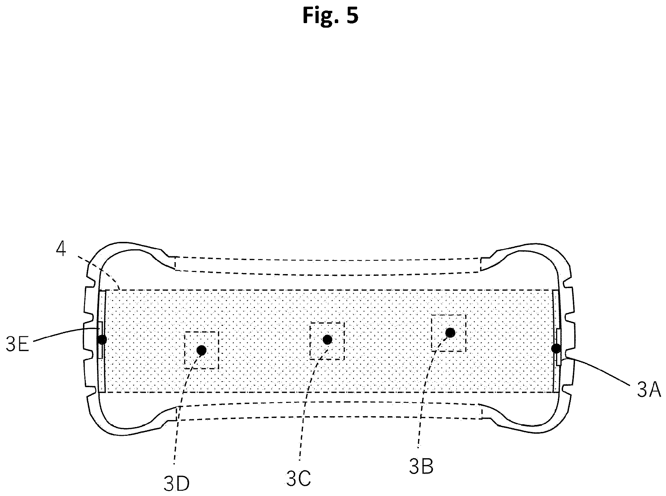

Although the one embodiment of the present invention has been described above, the present invention is not limited to the above embodiment, and various modifications can be made without departing from the gist of the present invention. For example, the following modifications are possible. In addition, the gist of the following modifications can be combined as appropriate.
(1) It is sufficient that the plurality of functional components are placed such that the centers of gravity thereof are distributed at equal intervals along the circumferential direction of the tire 2, and the positions of the centers of gravity thereof along the width direction of the tire 2 (direction parallel to the central axis A1) may be different from each other as shown in FIG. 5.
(2) The tire assembly 1 may constitute a system for monitoring the state of the tire 2 or the vehicle by means of the functional components, together with an in-vehicle device installed in the vehicle or a portable information processing terminal such as a laptop computer, a smartphone, a mobile phone, or a tablet.

## Claims

1. A tire assembly (1) comprising:
a tire (2);
a sound absorbing material (4) placed on an inner side of the tire (2); and
a plurality of functional components (3A to 3H) placed on the inner side of the tire (2), wherein
the plurality of functional components (3A to 3H) are placed such that masses of the plurality of functional components (3A to 3H) as a whole are distributed along a circumferential direction of the tire (2).

2. The tire assembly (1) according to claim 1, wherein the plurality of functional components (3A to 3H) are each any of a power generation device, a sensor device, a secondary battery, a capacitor, an antenna device, a transmitter, a processor, a memory, and a circuit.

3. The tire assembly (1) according to claim 1 or 2, wherein at least one of the plurality of functional components (3A to 3H) is placed between an inner surface (20, 20a) of the tire (2) and the sound absorbing material (4).

4. The tire assembly (1) according to one of claims 1 to 3, wherein the plurality of functional components (3A to 3H) are placed such that the masses of the plurality of functional components (3A to 3H) as a whole are distributed at equal intervals along the circumferential direction of the tire (2).

5. The tire assembly (1) according to one of claims 1 to 4, wherein the plurality of functional components (3A to 3H) are placed so as to be distributed at at least four locations along the circumferential direction of the tire (2).

6. The tire assembly (1) according to one of claims 1 to 5, wherein a difference between a maximum value and a minimum value of the masses of the plurality of functional components (3A to 3H) placed so as to be distributed at equal intervals along the circumferential direction of the tire (2) is not greater than 20 g.

7. The tire assembly (1) according to one of claims 1 to 6, wherein the sound absorbing material (4) is composed of a sponge material.

8. The tire assembly (1) according to claim 7, wherein the sponge material has a specific gravity of not less than 0.005 and not greater than 0.05.

9. The tire assembly (1) according to one of claims 1 to 8, wherein a cross-sectional area of the sound absorbing material (4) in a cut surface (P1) of the tire assembly (1) extending outward in a radial direction of the tire (2) from a central axis (A1) of the tire (2) is not less than 3% and not greater than 20% of a cross-sectional area of an inner space defined by an inner surface (20, 20a) of the tire (2) in a state where the tire (2) is fitted on a standardized rim and an air pressure of the tire (2) is a standardized air pressure.

10. The tire assembly (1) according to one of claims 7 to 9, wherein the sponge material has a thickness of not less than 5 mm and not greater than 30 mm.

11. The tire assembly (1) according to one of claims 7 to 10, wherein the sponge material is selected from the group consisting of a chloroprene rubber sponge, an ethylene-propylene rubber sponge, a nitrile rubber sponge, an ether-based polyurethane sponge, an ester-based polyurethane sponge, and a polyethylene sponge.

12. The tire assembly (1) according to one of claims 1 to 11, wherein each of the masses of the plurality of functional components (3A to 3H) is not greater than 20 g.
